# EUROPEAN PATENT APPLICATION

(11) **EP 4 715 583 A1**
(43) Date of publication of application: **25.03.2026**
(21) Application number: 25201311.5
(22) Date of filing: 10.09.2025
(51) Int. Cl.: G06F 9/38

(54) **REGISTER RENAMING FOR EXECUTION OF MIXED INSTRUCTIONS HAVING REGISTER CONFLICTS**

(30) Priority: 19.09.2024 US 202463696784 P; 15.07.2025 US 202519270459
(71) Applicant: Samsung Electronics Co., Ltd., Suwon-si, Gyeonggi-do 16677 (KR)
(72) Inventor: ZHANG, Tong, San Jose, CA, 95134 (US); ZENG, Jianping, San Jose, CA, 95134 (US); ZHANG, Da, San Jose, CA, 95134 (US); PITCHUMANI, Rekha, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

A technique for register renaming is disclosed. A conflict detector circuit is configured to detect a register conflict between a first decoded instruction and a second decoded instruction. The register conflict is associated with a first architectural register and a first physical register corresponding to the first architectural register. A mapping circuit is configured to change the first architectural register to a second architectural register and to map the second architectural register to a second physical register different from the first physical register. The first decoded instruction and the second decoded instruction are decoded from a single thread in a processing element (PE).

## Description

### CROSS-REFERENCE TO RELATED APPLICATIONS

### TECHNICAL FIELD

The disclosure generally relates to computer architecture. More particularly, the subject matter disclosed herein relates to register renaming for execution of mixed instructions having register conflicts.

### BACKGROUND

The present background section is intended to provide context only, and the disclosure of any concept in this section does not constitute an admission that said concept is prior art.

Advances in data science, artificial intelligence (AI), and machine learning (ML) have led to transformative changes in technologies across various industries. To accommodate these changes, semiconductor devices and systems have also been developed with new technologies including computing architecture, processor and memory designs, network security, and communication interfaces. Among these developments, processor architectures have become more and more significant, especially in applications that require high throughput, low power and small physical spaces such as mobile devices.

Among the advanced processor architecture designs, instruction pipeline structure has become popular for many processing applications including multi-threads and parallel operations. As the demands for high performance computing increase, designs of efficient processor architecture have increasingly faced many challenges. Issues such as architectural register dependencies, out-of-order and in-order executions, circuit complexities, inefficient compiler technologies, and complexities in communication and interfaces in multiprocessor environments have created numerous problems in instruction pipeline designs. Compilers tend to generate inefficient code in resolving register conflicts and do not exploit the internal structure of the microarchitecture. Hardware solutions tend to be overly complicated, leading to large silicon areas and are not suitable for high-performance computing.

The above information disclosed in this Background section is only for enhancement of understanding of the background of the disclosure and therefore it may contain information that does not constitute prior art.

### SUMMARY

To overcome these issues, systems and methods are described herein for a technique of register renaming in a microarchitecture. The technique aims at providing an efficient structure for resolving conflicts in register usage. The technique includes a hardware implementation of a circuit to rename registers at runtime when the instructions flow through an instruction pipeline in a processing element (PE).

In an embodiment, a register renaming circuit includes a conflict detector circuit and a mapping circuit. The conflict detector circuit is configured to detect a register conflict between a first decoded instruction and a second decoded instruction. The register conflict is associated with a first architectural register and a first physical register corresponding to the first architectural register. The mapping circuit is configured to change the first architectural register to a second architectural register and to map the second architectural register to a second physical register different from the first physical register. The first decoded instruction and the second decoded instruction are decoded from a single thread in a processing element (PE).

In an embodiment, A method comprising detecting a register conflict between a first decoded instruction and a second decoded instruction, the register conflict being associated with a first architectural register and a first physical register corresponding to the first architectural register, changing the first architectural register to a second architectural register and mapping the second architectural register to a second physical register that is available and different from the first physical register. The first decoded instruction and the second decoded instruction are decoded from a single thread in a processing element (PE).

In an embodiment, a system comprising a host processor configured to manage a processor operation and a memory operation, and processing element (PE) in a PE cluster configured to be managed by a management processor. The PE comprising a register renaming circuit comprising a conflict detector circuit configured to detect a register conflict between a first decoded instruction and a second decoded instruction, the register conflict being associated with a first architectural register and a first physical register corresponding to the first architectural register and a mapping circuit configured to change the first architectural register to a second architectural register and to map the second architectural register to a second physical register different from the first physical register. The first decoded instruction and the second decoded instruction are decoded from a single thread.

### BRIEF DESCRIPTION OF THE DRAWINGS

In the following section, the aspects of the subject matter disclosed herein will be described with reference to exemplary embodiments illustrated in the figures, in which:
FIG. 1 is a block diagram illustrating a system according to an embodiment.
FIG. 2 is a diagram illustrating an executing circuit in a PE according to an embodiment.
FIG. 3is a diagram illustrating a register renaming circuit according to an embodiment.
FIG. 4 is a diagram illustrating a mapping circuit according to an embodiment.
FIG. 5 is a flowchart illustrating a process for register renaming according to an embodiment.
FIG. 6 is a flowchart illustrating a process of mapping to a physical register according to an embodiment.

### ADVANTAGEOUS EFFECT OF INVENTION

According to embodiments of the present disclosure, register renaming for execution of mixed instructions with register conflicts with improved performance is provided.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, the term "solid-state" in the context of storage refers to a storage technology that uses integrated circuits, instead of moving parts (e.g., spinning disks, platters, read/write heads) to store data. The term "flash memory" refers to a type of non-volatile memory which retains data even when power is removed. It is commonly used in solid-state drives (SSDs). There are two types of flash memory: NAND flash and NOR flash. The NAND flash memory has high storage density and lower cost per bit and is suitable for SSDs, mobile applications. The NOR flash is optimized for random access and is often used in applications requiring fast code execution.

As used herein, the term "buffer" in the context of storage refers to a memory device that store data or information on a temporary basis as part of an operation that involves moving data from one location to another. A buffer is typically implemented by static random-access memory (RAM) for fast access. A buffer may be organized as a standard SRAM or a first-in-first-out (FIFO) organization.

In an embodiment, a technique for register renaming is disclosed. The technique provides an efficient in processing an instruction pipeline in a microarchitecture of a processing element (PE) in a system using multiple PEs. The technique offers several advantages including fast processing of stages in the instruction pipeline, dedicated circuitry to perform specific tasks, and independent operation of compiler. In an instruction pipeline, instructions go through several stages including decoding, register renaming, issuance, execution, and retirement. Register renaming is a stage that follows the instruction decoding stage. This stage is performed by a register renaming circuit which includes a conflict detector circuit and a mapping circuit. The conflict detector circuit is configured to detect a register conflict between a first decoded instruction and a second decoded instruction. The register conflict is associated with a first architectural register and a first physical register corresponding to the first architectural register. The mapping circuit is configured to change the first architectural register to a second architectural register and to map the second architectural register to a second physical register different from the first physical register. The first decoded instruction and the second decoded instruction are decoded from a single thread in a processing element (PE). The mapping circuit may include a name changer circuit and a mapping table. The name changer circuit is configured to change the first architectural register to the second architectural register. The mapping table is configured to map the second architectural register to the second physical register. The mapping table stores an architectural identifier that identifies one of the first architectural register or the second architectural register and a physical identifier that identifies the second physical register.

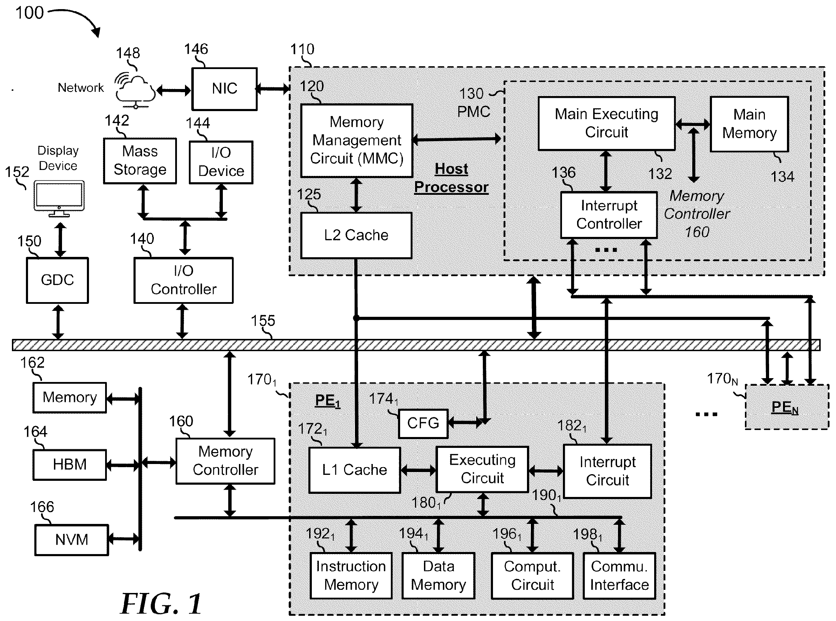

FIG. 1 is a block diagram illustrating a system 100 according to an embodiment. The system 100 may be implemented as one or more system-on-a-chip (SoC) packages including high-density devices such as three-dimensional (3D) packages. The system 100 includes a host processor 110, an input/output (I/O) controller 140, a network interface card (NIC) 146, a graphic display controller (GDC) 150, a bus 155, a memory controller 160, and multiple processing elements 170ₖ's (k=1, ..., N). These components may interface or include other components which are described further in the following. The system 100 may include more or less than the above components. In addition, a component may be integrated into another component. For example, the I/O controller 140, the GDC 150, and the memory controller 160 may be integrated in a module. The integration may be partial and/or overlapped. For example, the GDC 150 may be integrated into the processor 110, the I/O controller 140 and the memory controller 160 may be integrated into one single controller, etc. The system 100 may be an example that illustrates the role of high bandwidth memory (HBM) circuits in high computing (HC) platforms. Many HC platforms may use several HBM circuits, including stacked dynamic random-access memories (DRAMs) operating in conjunction with processing units or I/O circuits. In many cases, the environment of the applications adds additional criteria including low power consumption, reliable signal integrity, fault-tolerance, and reliable operations in extreme conditions including heat and tight space. Examples of other applications that would benefit from a highly integrated HBM design include mobile communication (e.g., smart phones, base stations, user equipment), cameras, vehicles, entertainment (e.g., games, multimedia, music, movies), technical designs (e.g., animation, graphics), medical (e.g., visualization, medical imaging), robotics, drones, automatic test equipment, audio processing, speech synthesizer, video and image analysis, vision, automatic face recognition, artificial intelligence (AI) applications, and data centers.

The host processor 110 is a programmable device that may execute a program or a collection of instructions to carry out a task. It may be a general-purpose processor, a digital signal processor, a microcontroller, a neural processing unit (NPU), or a specially designed processor such as a Field Programmable Gate Array (FPGA) or Applications Specific Integrated Circuit (ASIC). It may include a single core or multiple cores. Each core may have multi-way multi-threading. The processor 110 may have simultaneous multithreading features to further exploit the parallelism due to multiple threads across the multiple cores. The host processor 110 may include a memory management circuit (MMC) 120 and a processing management circuit (PMC) 130. The host processor 110 may include more or less than the above components. The bus 155 may be any suitable bus connecting the processor 110 to other devices, including the multiple PEs 170ₖ's (k=1, ...N). The bus 155 may be a Direct Media Interface (DMI).

The I/O controller 140 controls a mass storage 142 and input/output devices 144. The mass storage 142 may include CD-ROM, hard disk, and Solid-State Drives (SSDs). Input devices may include stylus, keyboard, mouse, microphone, and image sensor. Output devices may include audio devices, speaker, scanner, and printer. The network interface card (NIC) 146 provides an interface to a network, e.g., via a wireless medium 148.

The memory controller 160 may be an extension of the MMC 120. It controls memory devices such as a memory 162, an HBM 164, and a non-volatile memory (NVM) 166. The memory 162 may include static random-access memory (SRAM) and dynamic random-access memory (DRAM). The HBM 164 may include a 3-D stack of memory dies to offer high bandwidth, low latency, low power consumption, and high storage capacity. It may also have processing-in-memory (PIM) capability. The NVM 166 may include read-only memory (ROM), flash memory, wide-IO NAND, MRAM, and/or other types of memory. The memory 162 may store instructions or programs, loaded from the NVM 166 or the mass storage device 142, that, when executed by the processor 110 or any one of the PE's 170ₖ's, cause the processor 110 or any one of the PE's 170ₖ's to perform operations as described in various embodiments. It may also store data used in the operations. The NVM 166 may include instructions, programs, constants, or data that are maintained whether it is powered or not. The instructions or programs may correspond to the functionalities described in the following. In one embodiment, the programs may include a compiler that compiles a program to be executed in one of the PEs 170ₖ's. This compiler may be executed by the host processor 100 or any one of the processors connected to the bus 155.

The GDC 150 controls a display device 152 and provides graphical operations. It may be integrated inside the processor 110. It typically has a graphical user interface (GUI) to allow interactions with a user who may send a command or activate a function.

Additional devices or bus interfaces may be available for interconnections and/or expansion. Some examples may include the Peripheral Component Interconnect Express (PCIe) bus, the Universal Serial Bus (USB), etc.

The host processor 110 and multiple processing elements 170ₖ's maintain a tight communication interface via at least the bus 155 and other separate lines. The cluster of multiple PEs 170ₖ's operate under the control and management of the host processor 110. Once enabled and started, each of the PEs 170 may execute its own programs and access data in its private instruction memory 192 and data memory 194. The host processor 110 may provide a layer of abstraction for the overall architecture. In essence, it may hide the complexity of the program execution from the user or the high-level application. The application program may specify what needs to be done and the host processor 120 will take care of the details of how to carry out by allocating or assignment of the tasks to the individual PEs.

The host processor 110 includes a memory management circuit (MMC) 120 and a processing management circuit (PMC) 130. Each of the PEs 170ₖ's (k=1, ..., N) includes an L1 cache 172ₖ, a configuration (CFG) circuit 174ₖ, an executing circuit 180ₖ, an interrupt circuit 182ₖ, an instruction memory 192ₖ, a data memory 194ₖ, a computational circuit 196ₖ, and a communication interface 198ₖ. The host processor 110 and the PE 170ₖ may include more or less than the above components. In the following, for clarity, the index k for the PE 170ₖ and its associated elements may be dropped.

The MMC 120 is configured to operate with or without the memory controller 160 to manage a memory operation on at least one of the L2 cache 125, the main memory 134, the L1 cache 172 in the PE 170, the memory 162, the HBM 164, or the NVM 166 based on a memory access by at least one of the PMC 130 and at least one of the PEs 170's. The memory operation may include at least one of a read access, a write access, a page table update, a translation lookaside buffer (TLB) update, a cache response, and an access violation response. The L2 cache 125 may be configured to function as a translation lookaside buffer (TLB) to translate a virtual memory to physical memory. The L2 cache 125 is typically implemented by a fast memory such as fast SRAM to allow the MMC 120 to quickly retrieve the virtual-to-physical page mappings without accessing the slower page table. It may also be used as a cache storage to provide fast response to memory accesses. The MMC 120 may update the page table in the memory 162 or the TLB in the L2 cache 125 when there are new entries in the table. The MMC 120 may respond to any access violations such as non-existent memory addresses, buffer overflow, null pointer, etc. It may report any violations to a test controller (not shown) for debugging or testing purposes.

The PMC 130 includes a main executing circuit 132, a main memory 134, and an interrupt controller 136. It is configured to manage at least one processor operation performed by at least one of the PEs 170s. The processor operation may include at least one of a program launch, a program execution, and an interrupt delivery. The main executing circuit 132 may be a processing unit or circuit that can execute a program or instructions stored in the main memory 134. The program may be any suitable program. In one embodiment, the program is a compiler that compiles a program for execution in the PEs 170s. The main memory 134 is private to the PMC 130. It may be any suitable type of memory such as DRAM, SRAM, Magnetoresistive Random-Access Memory (MRAM), Flash, or any combination of them. The main memory 134 may include a page table to translate the virtual pages into physical pages as part of the memory management tasks done by the MMC 120. The main executing circuit 132 may also have access to the memory 162, the HBM 164, and the NVM 166 via the memory controller 160. The interrupt controller 136 controls and manages the interrupt requests and interrupt services from/to the PEs 170's. This may include prioritizing the interrupt requests and transmit commands or messages to the PEs 170's.

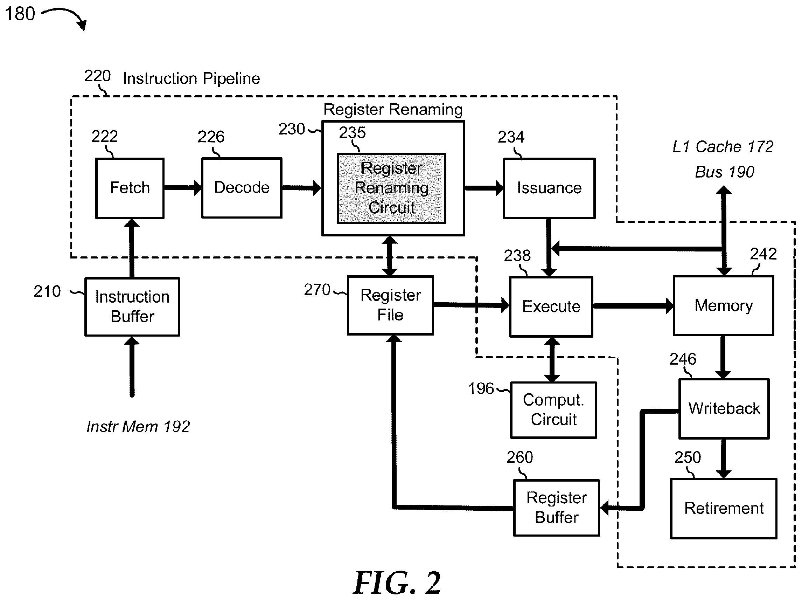

Each of the PEs 170s is configured to operate independently or in concert with other PEs 170s and the host processor 110. Together, they form a multiprocessor system that may cooperate to work in parallel or sequentially based on an overall system objective. In each of the PEs 170s, the executing circuit 180 is configured to be a circuit that can execute a program, instructions, or commands stored in the instruction memory 192. The executing circuit 180 is interfaced to, or communicates with, the instruction memory 192, the data memory 194, the computational circuit 196, the communication interface 198, and the memory controller 160 via a bus 190. Through the memory controller 160, the executing circuit 180 access the memory 162, the HBM 164, and the NVM 166. In some embodiments, the executing circuit 180 includes an instruction pipeline that processes the instructions from the instruction memory 192. The instruction pipeline in the executing circuit 180 will be described in FIG. 2. The executing circuit 180 may access data stored in data memory 194. The data memory 194 may be used to store temporary data and data structures such as stack or heap for program execution. The instruction and data memories 192 and 194 are private or local to the associated PE and may be implemented by any suitable memories including DRAM, SRAM, MRAM, Flash, or any combination of them. The computational circuit 196 is configured to perform logic and/or computational operations. It may include multiple functional units, tensor units, mathematical units, and a buffer and interconnect. These computational units may be scheduled by a PE scheduler (not shown). The PE scheduler may be configured by the host processor 110. The communication interface 198 provides interface for communication between the PEs and between the associated PE with the host processor 110. The L1 cache 172 provides fast cache memory to the executing circuit 180. It may be used to implement the TLB for address translation. It may be connected to the L2 cache 125 in the host processor 110 for additional cache operations. By allowing the L1 cache 172 in each PE to communicate with the L2 cache 125, the PEs may share information among themselves. The interrupt circuit 182 provides services for interrupt requests and responses among the PEs for inter-processor interrupts (IPI) and between the PEs and the host processor 110. It generates an IPI to another PE and receives an IPI response from another PE. The PEs may preload data or status in the memory 162 prior to requesting an interrupt so that the other PE may retrieve the data when servicing the interrupt. It may also generate an interrupt to the main executing circuit 132 through the interrupt controller 136 when the PE requests a service or reports a status. For example, the PE may send an interrupt to the main executing circuit 132 when it completes a currently assigned task. Prior to sending the interrupt, it may transmit messages, results, data, status, or condition to the memory 162 or the HBM 164 to allow the main executing circuit 132 to check the messages when it responds to the interrupt. This allows an efficient communication protocol between the PEs and the host processor 110. The CFG circuit 174 includes CFG data that configures the PE 170 to perform operations or calculations as necessary. The CFG circuit 174 may also enable or disable the PE under the control of the host processor 110.

FIG. 2 is a diagram illustrating the executing circuit 180 shown in FIG. 1 in the PE 170 according to an embodiment. The executing circuit 180 includes an instruction buffer 210, an instruction pipeline 220, a register buffer 260, and a register file 270. The executing circuit 180 may include more or less than the above components.

The instruction buffer 210 stores instructions from the instruction memory 192 and queues them to feed into the instruction pipelines 220. It may include small buffers inserted between stages in the pipeline 220 to keep the instruction flow moving. It may buffer in-order instructions, out-of-order instructions, or predicted branch instructions by corresponding circuits (not shown).

The instruction pipeline 220 includes a number of stages to prepare the instructions for execution in a program flow. The stages in the instruction pipeline 220 includes a fetch stage 222, a decode stage 226, a register renaming stage 230, an issuance stage 234, an execute stage 238, a memory stage 242, a writeback stage 246, and a retirement stage 250. The pipeline 220 may include more or less than the above stages. In addition, not all stages are active for all instructions.

The fetch stage 222 retrieves the instructions from the instruction buffer 210 or directly from the instruction memory 192. A program counter (not shown) keeps track of the address of the instructions. The fetched instructions are typically held in an instruction register ready to be decoded. The fetch stage 222 may include branch prediction, out-of-order execution, reorder buffer, mis-predicted branch handling, and other instruction fetch mechanisms to provide smooth flow of instructions through the pipeline.

The decode stage 226 involves decoding, interpreting, and translating the binary representation of the instructions into parts that can be understood and executed. This includes separating the instructions into opcode and operands and determining what actions to be performed. The result of the decode stage 226 includes decoded instructions which will be further examined to determine there is a conflict in register usage during the execution of the instructions. The decode stage 226 may including branching to a microcode that correspond to an instruction.

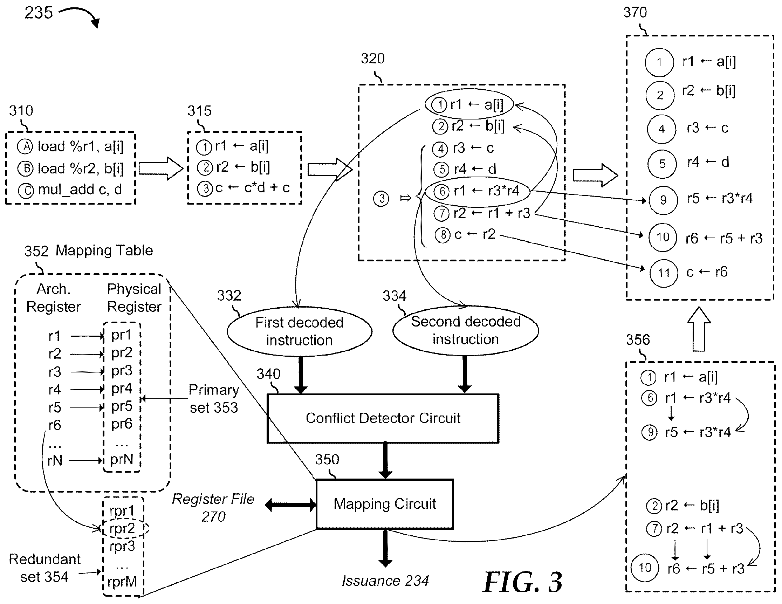

The register renaming stage 230 resolves register conflict usage in the decoded instructions. It removes false data dependencies, especially write-after-write (WAW) and write-after-read (WAR) hazards. The register renaming stage 230 maps the logical or architectural register names to physical register names in the processor internal register file. This process is dynamically updated as the instructions flow through the pipeline so that no conflicts can occur, and the operands can be correctly read and written. The register renaming stage 230 includes a register renaming circuit 235 that will be further described in FIG.3.

The issuance, or issue, stage 234 prepares the instructions for execution. It may include selecting and scheduling the instructions, taking into account factors such as program order and dependency analysis. The issuance stage 234 may include allocating resources (e.g., functional units, memory accesses) and retrieving operands. The issuance may include in-order and out-of-order schemes.

The execution stage 238 executes the instructions as issued and prepared by the issuance stage 234. It uses the computational circuit 196 (in FIG. 1) to perform the execution which may include arithmetic and logic operations provided by the functional unit and other operations. It may retrieve operands from the register file 270, calculate memory addresses, and evaluate branch predictions. It may obtain operands from the memory stage 242 which accesses the L1 cache 172 and the bus 190.

The memory state 242 obtains operands from memory or writes data to memory. Examples of instructions that may access memory include load and store. The memory stage 242 may be bypassed if the instruction does not access the memory.

The writeback stage 246 writes the results of the execution stage 238 back to the register file 270. It writes the data into a register buffer 260 which transmits the data to the register file 270 when ready. Depending on the instruction, the writeback stage 246 may obtain the data to be written back directly from the computational circuit 196 or from the memory stage 242.

The retirement stage 250 finalizes the instruction's execution. It may be merged with the writeback stage 246. It may include handling exceptions, releasing resources, and other housekeeping functions.

FIG. 3 is a diagram illustrating the register renaming circuit 235 employed in the register renaming stage 230 in FIG. 2 according to an embodiment. FIG. 3 also illustrates the process of register renaming with an illustrative example shown in blocks 310, 315, 320, 356, and 370.

The register renaming circuit 235 includes a conflict detector circuit 340 and a mapping circuit 350. The register renaming circuit 235 may include more or less than the above components. For example, the conflict detector circuit 340 and the mapping circuit 350 may be combined into one unit or circuit. In one embodiment, the conflict detector circuit 340 and the mapping circuit 350 are used with a compiler for register renaming at compile time. In another embodiment, the conflict detector circuit 340 and the mapping circuit 350 are used for register renaming at runtime.

The conflict detector circuit 340 is configured to detect a register conflict between a first decoded instruction 332 and a second decoded instruction 334. The register conflict is associated with a first architectural register and a first physical register that corresponds to the first architectural register. The first and second decoded instructions 332 and 334 may be part of a microcode sequence in a microarchitecture of the PE 170.

Block 310 shows three instructions A, B, and C in sequence. Block 315 shows the mnemonics of the instructions A, B, and C. The instruction A is *load %r1, a[i]* where %r1 refers to the architectural or logical register r1 and a[i] refers to the element i of the array a[]. The mnemonic of the instruction A is the *r1 ← a[i]* where the arrow ← indicates a load or a move operation. Similarly, the instruction B is *load %r2, b[i]* which means *r2 ← b[i]* and the instruction C is *mul_add c, d* which means c *←c*d +* c where * is the multiply operator and + is the add operator. The instructions 1 and 2 are referred to as simple instructions because they reference only a single register in the destination. Simple instructions are simple to decode, and the registers are explicitly defined. In contrast, the instruction 3 is referred to as a complex instruction because it involves multiple registers in both source and destination. Complex instructions may not explicitly define registers and therefore they may cause register conflicts.

After the decode stage 226, the instructions in Block 310 may become decoded instructions in Block 320. A compiler in the host processor 110 in FIG. 1 may compile the instructions in the block 310. The block 320 includes decoded instructions 1, 2, 4, 5, 6, 7, and 8. The instructions 4, 5, 6, 7, and 8 are the compiled and decoded instructions from the instruction 3. It can be recognized that a register conflict exists between instructions 1 and 6 and between instructions 2 and 7. The conflict exists because for instructions 1 and 6, the destination register *r1* is used in both instructions and for instructions 2 and 7, the destination register *r2* is used for both instructions. The consequence of the register conflict is that the previous contents of the register *r1* and *r2* are overwritten and destroyed.

In the present example, the instructions 1 and 6 are referred to as the first decoded instruction 332 and the second decoded instruction 334, respectively. The conflict detector circuit 340 receives the first and second decoded instructions 332 and 334 and determines if a register conflict exists. This can be done by comparing the destination registers in the two instructions. If they are the same, and if the content of the preceding register has not been saved, a conflict exists. If they are different or if they are the same but the content of the preceding register has been saved, there is no conflict, and the process may continue to the next pair or to the next stage if all instructions in the group have been processed. All possible pairs in the group are searched for conflict. When a conflict exists, a register renaming operation will be carried out to resolve the conflict. This may be done by the mapping circuit 350. The registers shown in the decoded instructions are referred to as the architectural or logical registers. They do not represent the actual physical registers in the register file 270 which stores the data. The first decoded instruction 332 and the second decoded instruction 334 are decoded from a single thread in the PE 170. In one embodiment, the actual physical registers are grouped into two sets: a primary set 353 and a redundant set 354. The primary set 353 includes the physical registers that are used as the primary registers for mapping. The redundant set 354 acts as a back-up set and includes physical registers that are redundant and used when the primary registers are being used and not available for mapping during a renaming operation. Initially, all primary registers are available. As the instructions progress, these registers are used and there may be less and less available primary registers. When no primary registers are available, redundant registers may be used until the primary registers are freed up. The redundant set 354 is hidden from the user to simplify instruction translation or decoding.

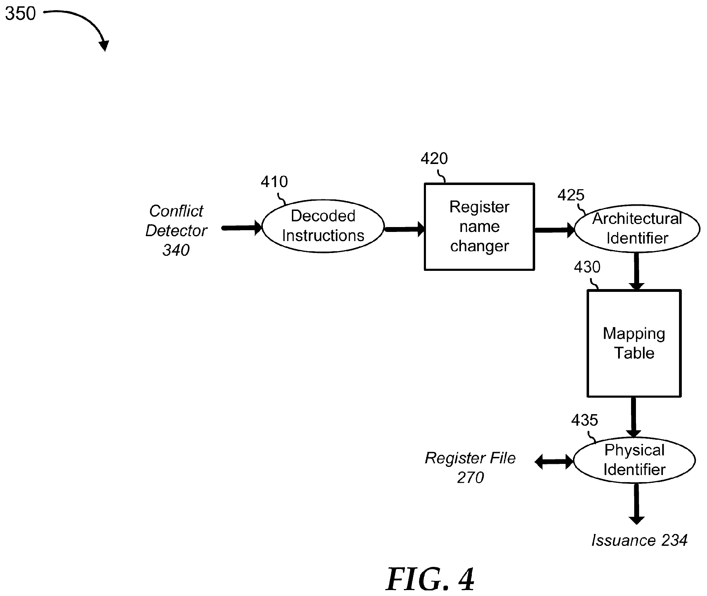

When a conflict occurs, the register renaming renames one of the architectural registers so that it will reference a different physical register. In the example shown in FIG. 3, a conflict exists between instructions 1 and 6 (in block 320) that involves architectural register *r1.* At the beginning, the architectural register *r1* is mapped to a first physical register *pr1* from the primary set. When the conflict is detected at instruction 6, the architectural register *r1* is changed or translated to the second architectural register *r5* which is mapped to a second physical register *pr5* to avoid overwriting the first physical register *pr1.* In other words, the mapping circuit 350 is configured to change the first architectural register *r1* in instruction 6 to a second architectural register *r5* which is mapped to a second physical register *pr5* that is available in the primary set 353 and different from the first physical register *pr1.* In this example, at this point the use of five physical registers is for illustration only because prior to the conflict, four architectural registers are mapped to four corresponding physical registers. When the conflict occurs, assuming the next physical register *pr5* is available from the primary set, it will be used for mapping to *r5.* The mapping circuit 350 will be described further in FIG.4. 'By selecting a different physical register, the contents of the register in the preceding decoded instruction are preserved. To do so, the mapping circuit 350 includes a mapping table 352 that maps an architectural register to a physical register. The mapping table 352 shows the following mappings:
r1 → pr1
r2 → pr2
r3 → pr3
r4 → pr4
r5 → pr5
r6 → rpr2
   . . .
rN → prN

The next conflict occurs with the instructions 2 and 7 because both use architectural register *r2* as a destination register. At instruction 2, architectural register *r2* is mapped to physical register *pr2.* When a conflict is detected at instruction 7, architectural register *r2* will be mapped to architectural register *r6* so that it can be mapped to another available primary physical register (e.g., *pr6*) as with the instruction 6 discussed above. However, suppose no primary physical registers are available because they are being used in other instructions, architectural register *r6* will be mapped to a back-up, or redundant, physical register selected from the redundant set 354. Since it is likely that the primary physical registers will be used up, especially when many instructions are pending, the redundant set 354 of physical registers can be used as back-up. The redundant set 354 is hidden from the user and the redundant registers will be used when no primary physical registers in the register file 370 are available for renaming. Alternatively, if no physical registers are available, other techniques may be employed to free the physical registers including temporarily storing the contents in memory. Other techniques may also be used if the redundant set 354 is also being used up. In this example, suppose the redundant physical register *rpr2* is available. the architectural register *r6* is mapped to the redundant physical register *rpr2* to illustrate this concept.

Block 356 illustrates the register renaming process. For the instructions 1 and 6 of Block 320, the architectural register *r1,* (which is mapped to the physical register *pr1* in the mapping table 352), in the case of instruction 6 will be renamed to an architectural register *r5* which is mapped to the physical register *pr5* to become instruction 9. The physical register *pr5* is different from the physical register *pr1* and is available in the primary set 353 for use. Regardong instructions 2 and 6, for the instruction 2, the architectural register *r2* is mapped to the physical register *pr2.* For the instruction 7, the architectural registers *r2*, and *r1* are renamed to architectural registers *r6* and *r5,* respectively. For illustrative purposes, assume no physical registers are available in the primary set 353 after the register renaming in instruction 6. Therefore, the architectural register *r6* is mapped to a register in the redundant set 354. Suppose this redundant register is the redundant physical register *rpr2* in the redundant set 354, which is different from *pr2* and is available, per the mapping table 352. As a result, the conflicts at the architectural registers *r1* and *r2* are resolved.

Block 370 includes the final sequence of instructions after register renaming. The instructions 6, 7, and 8 are converted to instructions 9, 10, and 11, respectively. All register conflicts have been resolved. The instructions are then forwarded to the issuance stage 234.

FIG. 4 is a diagram illustrating the mapping circuit 350 shown in FIG. 3 according to an embodiment. The mapping circuit 350 includes a register name changer 420 and a mapping table 430. The mapping circuit 350 may include more or less than the above components.

The register name changer 420 receives decoded instructions 410 from the conflict detector circuit 340. The decoded instruction 410 include the architectural registers as shown in Block 320 in FIG.3. The register name changer 420 is a circuit that is configured to change the first architectural register in the decoded instructions 410 to a second architectural register. This is illustrated in block 356 in FIG. 3 where the architectural register *r1* is changed to the architectural register *r5* and the architectural register *r2* is changed to the architectural register *r6*. The register name changer 420 generates an architectural identifier which identifies the register such as the register number.

The mapping table 430 is configured to map the second architectural register to the second physical register. It is a fast memory (e.g., SRAM) that contains identifiers of the architectural registers and the corresponding physical registers, including the redundant physical registers, as shown in the table 352 in FIG.3. Since registers used in instructions store data on a temporary basis, there is no particular selection criteria other than the availability of the register. Therefore, the mapping table 430 may select any register available for storing data. As shown in FIG. 3, depending on the availability, either the primary set 353 or the redundant set 354 may be used. In some embodiments, the mapping table 430 may be implemented by a Look-Up table (LUT) or a hash function. The mapping table 430 generates a physical identifier 435 that corresponds to the architectural identifier 425. The physical identifier 435 may then be used to access the register file 270 if necessary. The physical identifier 435 is then forwarded to the issuance stage 234.

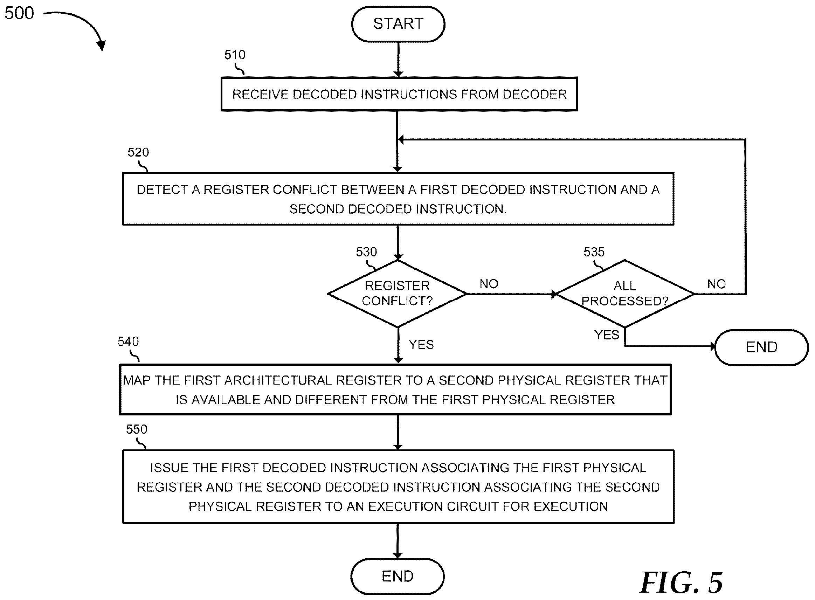

FIG. 5 is a flowchart illustrating a process 500 for register renaming according to an embodiment.

Upon START, the process 500 receives decoded instructions from the decoder (Block 510). The decoded instructions may include instructions that have register conflicts. Next, the process 500 detects a register conflict between a first decoded instruction and a second decoded instruction (Block 520). The first decoded instruction and the second decoded instruction are decoded from a single thread in a processing element (PE). The register conflict is associated with a first architectural register and a first physical register that corresponds to the first architectural register. This may be achieved by scanning the register fields of the instructions and determining if there are any matches. Additionally, the operation may also include checking the status of the register to determine if the register has been saved. Then, the process 500 determines if a register conflict exists (Block 530). If not (NO at block 530), the process 500 determines if all instructions in the block have been processed (Block 535). If not, the process 500 returns to block 520 to continue checking other instructions. Otherwise, if all instructions have been processed for renaming the process 500 is terminated.

If a register conflict exists (YES at block 530), the process 500 changes the first architectural register to a second architectural register and maps the second architectural register to a second physical register different from the first physical register (Block 540). Next, the process 500 issues the first decoded instruction associating the first physical register and the second decoded instruction associating the second physical register to an execution circuit for execution (Block 550). This is to advance the instructions to the issuance stage. The process 500 is then terminated.

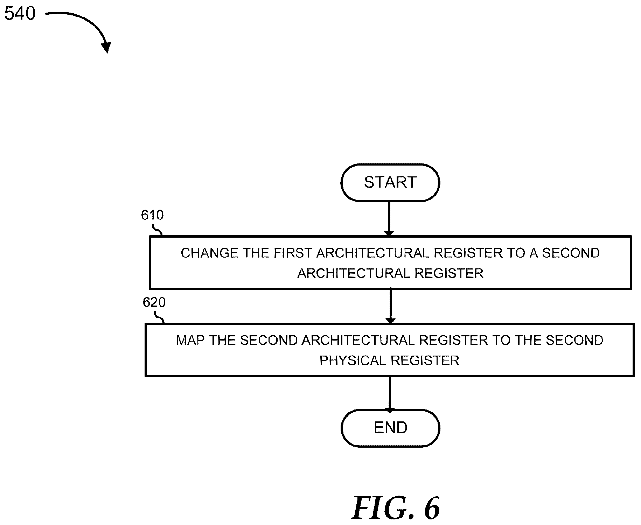

FIG. 6 is a flowchart illustrating the process 540 of mapping to a physical register shown in FIG. 5 according to an embodiment.

Upon START, the process 540 changes the first architectural register to a second architectural register (Block 610). This is illustrated in block 356 in FIG. 3where the architectural registers *r1* and *r2* are changed to architectural registers *r5* and *r6,* respectively. Next, the process 540 maps the second architectural register to the second physical register (Block 620). This mapping is illustrated in the mapping table 352 in FIG. 3 where *r5* is mapped to *pr5* and *r6* is mapped to rpr2. The mapping table 352 stores an architectural identifier that identifies one of the first architectural register or the second architectural register and a physical identifier that identifies the second physical register. The process 540 is then terminated.

All or part of an embodiment may be implemented by various means depending on applications according to particular features, functions. These means may include hardware, software, or firmware, or any combination thereof. A hardware, software, or firmware element may have several modules coupled to one another. A hardware module is coupled to another module by mechanical, electrical, optical, electromagnetic or any physical connections. A software module is coupled to another module by a function, procedure, method, subprogram, or subroutine call, a jump, a link, a parameter, variable, and argument passing, a function return, etc. A software module is coupled to another module to receive variables, parameters, arguments, pointers, etc. and/or to generate or pass results, updated variables, pointers, etc. A firmware module is coupled to another module by any combination of hardware and software coupling methods above. A hardware, software, or firmware module may be coupled to any one of another hardware, software, or firmware module. A module may also be a software driver or interface to interact with the operating system running on the platform. A module may also be a hardware driver to configure, set up, initialize, send and receive data to and from a hardware device. An apparatus may include any combination of hardware, software, and firmware modules.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. An apparatus comprising:
a conflict detector circuit configured to detect a register conflict between a first decoded instruction and a second decoded instruction, the register conflict being associated with a first architectural register and a first physical register corresponding to the first architectural register; and
a mapping circuit configured to change the first architectural register to a second architectural register and to map the second architectural register to a second physical register different from the first physical register,
wherein the first decoded instruction and the second decoded instruction are decoded from a single thread in a processing element, PE.

2. The apparatus of claim 1, wherein the first architectural register and the first physical register are destinations of the first and second decoded instructions.

3. The apparatus of claim 1 or 2,
wherein the first decoded instruction is a simple instruction referencing one register being the first architectural register and the second decoded instruction is a complex instruction referencing at least a source register and a destination register being the second architectural register.

4. The apparatus of any one of claims 1 to 3, wherein the second physical register is selected from a primary set and a redundant set based on availability.

5. The apparatus of any one of claims 1 to 4, wherein the first decoded instruction associating the first physical register and the second decoded instruction associating the second physical register are issued by an instruction issuer to an execution circuit for execution.

6. The apparatus of any one of claims 1 to 5, wherein the mapping circuit comprises:
a name changer circuit configured to change the first architectural register to the second architectural register; and
a mapping table configured to map the second architectural register to the second physical register,
wherein the mapping table stores an architectural identifier that identifies one of the first architectural register or the second architectural register and a physical identifier that identifies the second physical register.

7. The apparatus of any one of claims 1 to 6, wherein the first and second decoded instructions are part of a microcode sequence in a microarchitecture of the processing element.

8. The apparatus of any one of claims 1 to 7,
wherein the conflict detector circuit and the mapping circuit are configured to be used in a compiler for register renaming at compile time, and/or
wherein the conflict detector circuit and the mapping circuit are configured to be used for register renaming at runtime, and/or
wherein the PE is part of a PE cluster in a high-bandwidth memory, HBM, processing system.

9. A method comprising:
detecting a register conflict between a first decoded instruction and a second decoded instruction, the register conflict being associated with a first architectural register and a first physical register corresponding to the first architectural register;
changing the first architectural register to a second architectural register; and
mapping the second architectural register to a second physical register that is available and different from the first physical register,
wherein the first decoded instruction and the second decoded instruction are decoded from a single thread in a processing element, PE.

10. The method of claim 9,
wherein the first architectural register and the first physical register are destinations of the first and second decoded instructions, and/or
wherein the first decoded instruction is a simple instruction referencing one register being the first architectural register and the second decoded instruction is a complex instruction referencing at least a source register and a destination register being the second architectural register, and/or
wherein the second physical register is selected from a primary set and a redundant set based on availability.

11. The method of any one of claims 9 or 10, further comprising issuing the first decoded instruction associating the first physical register and the second decoded instruction associating the second physical register to an execution circuit for execution.

12. The method of any one of claims 9 to 11, wherein mapping comprises:
mapping the second architectural register to the second physical register using a mapping table,
wherein the mapping table stores an architectural identifier that identifies one of the first architectural register or the second architectural register and a physical identifier that identifies the second physical register.

13. The method of any one of claims 9 to 12, wherein the first and second decoded instructions are part of a microcode sequence in a microarchitecture of the processing element.

14. The method of any one of claims 9 to 13,
wherein detecting the register conflict and mapping are performed by a compiler at compile time, or
wherein detecting the register conflict and mapping are performed at runtime.

15. A system comprising:
a host processor configured to manage a processor operation and a memory operation; and
a processing element, PE. in a PE cluster configured to be managed by a management processor, the PE comprising:
a register renaming circuit which is the apparatus of any one of claims 1 to 8.
